# EUROPEAN PATENT SPECIFICATION

(11) **EP 3 736 777 B1**
(45) Date of publication and mention of the grant of the patent: **21.10.2026**
(21) Application number: 20173736.8
(22) Date of filing: 08.05.2020
(51) Int. Cl.: G07B 15/06, G08G 1/01, G08G 1/015, G08G 1/04, G06V 20/54, G08G 1/017

(54) **METHOD AND SYSTEM FOR DETERMINING THE DIGITAL FINGERPRINT OF VEHICLES IN TRANSIT**
VERFAHREN UND SYSTEM ZUR BESTIMMUNG DES DIGITALEN FINGERABDRUCKS VON FAHRZEUGEN IM TRANSIT
PROCÉDÉ ET SYSTÈME PERMETTANT DE DÉTERMINER LES EMPREINTES DIGITALES NUMÉRIQUES DE VÉHICULES EN TRANSIT

(30) Priority: 08.05.2019 IT 201900006648
(43) Date of publication of application: 11.11.2020
(73) Proprietor: Sinelec S.p.A., 15057 Tortona (AL) (IT)
(72) Inventor: CONTEGNO, Pietro, 15057 TORTONA (AL) (IT)
(74) Representative: Studio Torta S.p.A.

(56) References cited:
- EP-A1- 2 518 695
- WO-A1-94/28516
- GB-A- 2 266 398

## Description

### CROSS-REFERENCE TO RELATED APPLICATIONS

This patent application claims priority from Italian patent application no. 102019000006648 filed on May 8, 2019.

### TECHNICAL FIELD

The present invention relates to a method and a system for determining the digital fingerprint of vehicles in transit, to be used for various purposes such as for example automatic charging of tolls, fees, penalties, traffic monitoring and control, or the like.

The invention finds particularly advantageous application in automatic charging of tolls, fees, etc. to vehicles in transit, an application to which explicit reference will be made hereinafter purely by way of non-limiting example, since the invention can be extended to various other uses and applications.

In particular, the invention relates to a method and a system of the so-called free-flow type, i.e. which allow automatic charging of tolls, fees, etc. to vehicles in transit without the need to stop the vehicles.

### BACKGROUND OF THE INVENTION

Free-flow charging systems and methods, also known as automatic dynamic charging, are known, which allow the charging of fees, for example motorway tolls or for access to traffic-restricted areas, without the need to stop the vehicle at a payment station.

For example, a widespread system for collecting motorway tolls is based on a network of fixed stations, normally installed at the entrances and exits of the toll sections, connected to a processing station and communicating with mobile devices installed on the vehicles.

The stations are equipped with sensors for the acquisition of data on vehicles in transit, which together with the data received from the mobile devices are used to identify vehicles and charge the fees due.

In general, the known free-flow systems therefore require the acquisition and processing of various parameters for the identification and classification of vehicles. In particular, the known systems are based on the acquisition of signals emitted by vehicle on-board devices, the reading of the plates, and the classification of the vehicles, carried out for example through inductive coils embedded in the asphalt or radar systems that detect the shape of the vehicles.

The system can proceed with the charging only in the event of perfect correspondence between all the parameters detected.

For examples, WO94/28516A1 discloses a method and a device for the registration of a vehicle in a road toll, by means of radio transmitter and receiver equipment for microwaves arranged to communicate with vehicle units provided in the vehicles, preferably with a transponder. On command from the road toll facility, identity is obtained from the road toll facility and a toll debiting operation is performed. When a vehicle enters the toll facility it is detected by means of the activation of the toll facility radio equipment if the vehicle is provided with a vehicle unit and if it is in function for the performance of a correct payment maneuver. Unidentified vehicles are exposed to a successive position determination by means of video cameras through an image processing in which the vehicle in question is tracked between a predetermined recording site and the position where the payment status of the vehicle has been established by means of the radio equipment. In the recording site the number plate of the vehicle is recorded for identification by means of a video camera, which identification in conjunction with data such as time and place is used for search and for post-debiting of the toll.

EP2518695A1 discloses an electronic vehicle identification system and method in which a vehicle is identified in a toll system by accessing a set of toll transaction entries. Each entry designates a toll transaction and includes a transaction descriptor and a transaction time stamp. A series of toll transaction pictures is accessed, each of which is associated with a picture time stamp. A toll transaction entry is identified from the set as a violation transaction entry based on the transaction descriptor. A toll transaction picture is selected from the series. The transaction time stamp of the violation transaction is compared, using a processing device, with the picture time stamp of the selected toll transaction picture. The selected toll transaction picture is identified as a violation picture corresponding to the violation transaction entry based on a result of the comparison.

The devices that detect the identification parameters from vehicles in transit, however, are normally subject to errors. The question thus arises as to how to handle doubtful cases, that is, cases exhibiting incongruences between the data collected.

In the known systems, the checking of all doubtful or problematic cases is delegated to so-called back-office operations: the case data that cannot be automatically processed by the system are thus sent to an operator who checks them and, if possible, tries to solve any incongruences.

In fact, the known systems are not able to automatically proceed with the assessment of the acquired data to solve any incongruences.

Clearly, these operating methods have a substantial cost.

In any case, then, the known systems require relatively complicated and expensive devices and apparatuses and therefore have installation, maintenance and operating costs which can also be very high.

The known systems and methods mentioned herein may therefore be not fully satisfactory, being complicated and expensive to install and use, above all in terms of reliability due to the high incidence of doubtful cases that, ultimately, cannot be charged.

### SUMMARY OF THE INVENTION

It is an object of the present invention to provide a method and a system for automatic charging of vehicles, which are free from the drawbacks of the prior art described herein.

The present invention therefore relates to a method and a system for automatic charging of vehicles as defined in essential terms in the annexed claims 1 and 9, respectively, as well as in the dependent claims relating to additional preferred features.

### BRIEF DESCRIPTION OF THE DRAWINGS

The invention is further described in the following non-limiting embodiments, with reference to the attached figure which schematically represents an automatic charging system for vehicles according to the invention.

In the attached figure, number 1 indicates, as a whole, an automatic charging system for vehicles.

### DETAILED DESCRIPTION OF THE INVENTION

In the non-limiting embodiment described herein, the system 1 is intended for the collection of tolls for the transit of vehicles on a toll road. It is understood that the system 1 of the invention can also find application in other fields and for the collection of other types of fees.

The system 1 comprises at least one portal 2 located along a road 3. Suitably, the system 1 comprises a plurality of portals 2 located along the road 3 and spaced apart from one another along the road 3.

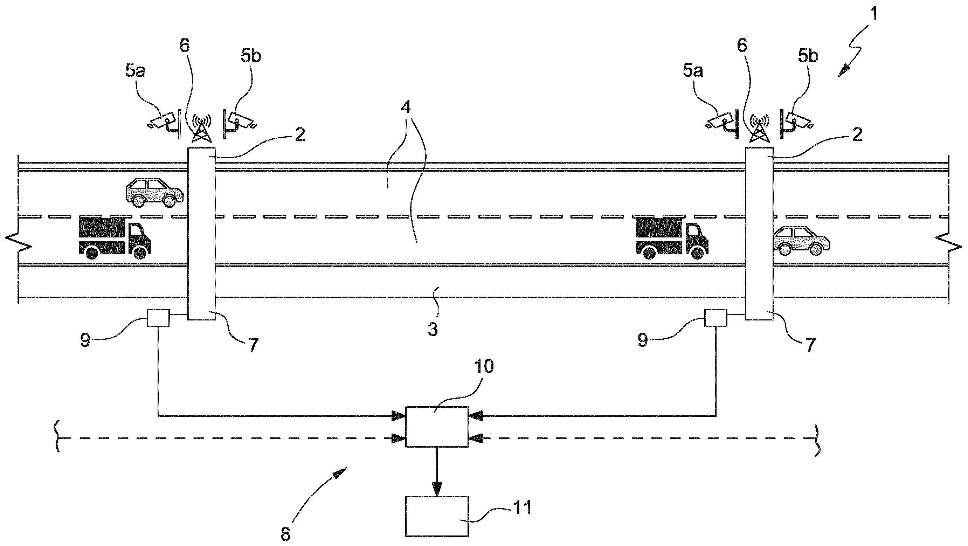

Figure 1, for example, shows two portals 2 arranged in succession in the normal direction of travel of the vehicles along the road 3, which is a multi-lane road having a plurality of lanes 4, possibly intended for opposite directions of travel.

Clearly, each portal 2 can be extended and therefore can operate on one or more lanes 4, even in opposite directions of travel, of the road 3.

Each portal 2 comprises, for each lane 4 served by the portal 2:
- a pair of cameras 5a, 5b respectively facing upstream and downstream of the portal 2 in the direction of travel of the vehicles on the lane 4; the camera 5a is positioned so as to shoot frontally the vehicles approaching the portal 2; the camera 5b is positioned so as to shoot from behind the vehicles which, having passed the portal 2, move away from it;
- an antenna 6, in particular a DSRC antenna for dedicated short-range communication with on-board devices possibly present on vehicles in transit.

The cameras 5a, 5b and the antenna 6 are installed on a support frame 7, for example bridged over the road 3. It is understood that the frame 7 can have different shapes and other configurations of the portal 2 are possible.

Each camera 5a, 5b is provided with two different optical systems having respective focal lengths: a first optical system comprising, for example, a teleobjective (for example, with a focal length of about 25 mm), is used to frame the plates of the vehicles and is preferably associated with an infrared illuminator; a second optical system comprising, for example, a wide-angle lens (for example, with a focal length of about 12 mm) is used to track the trajectories of the vehicles.

In one embodiment, the cameras 5a, 5b operate in the visible spectrum, i.e. they are equipped with elements sensitive to visible light.

In an alternative embodiment, which is more efficient under poor visibility conditions, for example at night or in case of fog, the cameras 5a, 5b are IR cameras operating in the infrared field. Therefore, the cameras 5a, 5b are provided with elements sensitive to infrared light, in particular having a wavelength between about 2 and about 15 µm and preferably between about 5 and about 12 µm, for example 7-10 µm. In this way, the cameras 5a, 5b are not affected by the lighting conditions (day/night, bad weather) .

The antenna 6 is configured to interrogate vehicle on-board devices (for example, a transponder) to receive in response an identification code therefrom.

Optionally, the system 1 can comprise auxiliary sensors, located on the portal 2 or in the proximity of the portal 2, for detecting further parameters of the vehicles in transit, such as for example a weight sensor (for example, embedded in the asphalt of the road 3) for detecting the total weight and/or the weight per axle of the vehicles.

The system 1 further comprises a data processing system 8, connected to the portals 2, and in particular to the cameras 5a, 5b and the antenna 6 (as well as any auxiliary sensors) of each portal 2, and configured so as to process images and signals from the cameras 5a, 5b and the antenna 6 for assigning each vehicle a series of data which together define a (virtual) digital fingerprint of each vehicle, as will be further described below.

The data processing system 8 can be variously configured, and in particular comprise one or more distinct, variously located and connected processing units.

In the merely exemplary embodiment illustrated and described herein (but not necessarily), the data processing system 8 comprises a local processing unit 9 positioned on each portal 2 and connected to the cameras 5a, 5b and to the antenna 6 of the respective portal 2 for processing data therefrom; and a central processing unit 10, which is connected to the local processing units 9 of the portals 2 and receives and processes the data transmitted by the local processing units 9.

It is understood that the data processing system 8 can be differently structured and that the processing functions described below with reference to the local processing units 9 can be performed by the central processing unit 10 and/or vice versa. The subdivision of functions and logical operations among the local processing units 9 and the central processing unit 10 as described below is therefore to be understood as purely exemplary and in no way limiting.

The cameras 5a, 5b frame respective sections of the road 3 and acquire images of the vehicles in transit.

The cameras 5a, 5b are configured to shoot each vehicle along a route.

The local processing unit 9 connected to the cameras 5a, 5b acquires the images taken by the cameras 5a, 5b, and through algorithms loaded in the local processing unit 9 processes the images for assigning each vehicle a series of data which together define a (virtual) digital fingerprint of each vehicle.

Image processing allows, in particular, for each vehicle framed, the assignment of a timestamp corresponding to the passage of the vehicle; the reading of the front plate and the rear plate of the vehicle; the calculation of the dimensions and/or outline of the vehicle and the association of a class and/or a type of vehicle to the vehicle; the determination of the lane travelled by the vehicle; optionally, the determination of one or more other parameters of the vehicle, such as colour, make (manufacturer), model, etc.

In particular, the local processing unit 9 is configured to process the images acquired by the cameras 5a, 5b and:
- track each vehicle filmed by the cameras 5a, 5b to follow the route of each vehicle;
- obtain, from the images acquired along the route, data (for example: shape, outline, dimensions, etc.) that are used by a classification algorithm loaded in the local processing unit 9 for classifying the vehicles, in particular for determining whether the filmed vehicle is a car, a truck, a motorcycle, etc.

According to the invention, the local processing unit 9 is provided with machine learning algorithms for data acquisition and association to define the fingerprints of the vehicles.

The antenna 6 interrogates the vehicle on-board devices and receives in response therefrom a signal representative of an identification code of the vehicle, which in turn is included in the vehicle's fingerprint along with the other acquired data.

Each fingerprint therefore consists of a data string representative of various parameters of the vehicle.

All the data acquired by the portal 2 through the cameras 5a, 5b and the antenna 6 (and possibly through the auxiliary sensors) and processed by the local processing unit 9 are then transmitted to the central processing unit 10.

In turn, the central processing unit 10 is equipped with an artificial intelligence engine and machine learning algorithms, with which it processes the transmitted data.

In particular, the central processing unit 10 compares the data transmitted by the portals 2 to solve any incongruences. The artificial intelligence engine compares all the detected fingerprints (i.e. all the data strings acquired by the portals 2) and can automatically correct a possible error in a single data item when all the remaining data referred to the same fingerprint and therefore to the same vehicle are consistent with and confirmed by other fingerprints.

For example, an error in reading one digit of a plate is corrected if all the other detected data of the same fingerprint are consistent.

The artificial intelligence engine of the central processing unit 10, after carrying out the checks, calculates the due fee according to the fingerprint of the vehicle and transmits the data to a payment system 11, known per se, so as to charge the fee.

The advantages of the invention compared to the prior art are clear from the foregoing.

Firstly, the portal 2 has an extremely simple structure, requiring a limited number of devices installed on the portal 2: in essence, the portal 2 only requires the cameras 5a, 5b and the antenna 6.

As a result, the installation, initial configuration and subsequent maintenance of the portal 2 are simplified.

Furthermore, the data correlation methods are definitely improved, as they are managed by an artificial intelligence engine equipped with machine learning algorithms.

In this way, the system 1 of the invention manages to significantly reduce the ambiguous cases and ultimately increase the certain cases sent to the payment system for the charging.

The data acquired by the system 1 can then be used for other purposes, for example for assessing and controlling traffic, detecting and possibly sanctioning incorrect or dangerous conduct, etc.

Lastly, it is understood that the method and the system for automatic charging of vehicles as described and illustrated herein can be subject to further modifications and variations that do not depart from the scope of the accompanying claims.

## Claims

1. A method for determining the digital fingerprint of vehicles in transit for automatic charge of tolls, fees and/or other possible treatments, comprising the steps of:
- providing a plurality of portals (2) arranged spaced apart from one another along a road (3), each portal (2) being provided with at least one pair of cameras (5a, 5b) respectively facing upstream and downstream of the portal (2) in the direction of travel of vehicles on at least one lane (4) of the road (3) to shoot frontally the vehicles approaching the portal (2) and, respectively, from behind the vehicles which, having passed the portal (2), move away from it; and with at least one antenna (6), in particular a DSRC antenna for dedicated short-range communication, configured to interrogate vehicle on-board devices to receive an identification code therefrom;
- processing, for each of the plurality of portals (2), images and signals from the cameras (5a, 5b) and the antenna (6) to assign each vehicle a series of data which together define a digital fingerprint of each vehicle;
wherein the step of processing images and signals comprises the steps of:
- processing images acquired by the cameras (5a, 5b) and tracking each vehicle shot by the cameras (5a, 5b) along a track; and
- obtaining from the images acquired along the track data which are used by a classification algorithm for classifying the vehicles;
- wherein the step of processing images and signals comprises the steps of: assigning a timestamp corresponding to the passage of the vehicle; reading the front plate and the rear plate of the vehicle; calculating from the images acquired along the track the dimensions and/or outline of the vehicle and associating a class and/or a type of vehicle to the vehicle which are used by the classification algorithm for classifying the vehicles; and
- wherein the step of processing images and signals is carried out by an artificial intelligence engine to solve possible incongruences and comprises the steps of: comparing all the detected digital fingerprints from the plurality of portals (2) and automatically correcting an error in a single data item in a digital fingerprint when all the remaining data referred to the same digital fingerprint and to the same vehicle are consistent with and confirmed by other digital fingerprints.

2. The method according to claim 1, wherein the step of processing images and signals comprises the step of determining one or more other parameters of the vehicle selected from colour, brand, model, lane used by the vehicle.

3. The method according to claim 1 or 2, wherein the step of processing images and signals is carried out by machine learning algorithms for data acquisition and association to define the digital fingerprints of the vehicles.

4. The method according to one of the preceding claims, wherein each camera (5a, 5b) is provided with two different optical systems having respective focal lengths; a first optical system comprising a teleobjective, a second optical system comprising a wide-angle lens.

5. The method according to one of the preceding claims, wherein the cameras (5a, 5b) are IR cameras operating in the infrared field.

6. The method according to claim 5, wherein the cameras (5a, 5b) are provided with elements sensitive to infrared light, in particular having a wavelength between about 2 and about 15 µm and preferably between about 5 and about 12 µm, for example 7-10 µm.

7. The method according to one of the preceding claims, wherein the step of processing images and signals comprises a step of interrogating the vehicle on-board devices by means of the antenna (6) and receiving in response a signal representative of an identification code of the vehicle, which is in turn included in the digital fingerprint of the vehicle.

8. The method according to one of the preceding claims, used for collecting fees, such as tolls for transit of vehicles on a toll road, and comprising a step of calculating a due fee according to the digital fingerprint of the vehicle, and transmitting said fee to a payment system (11).

9. A system (1) for determining the digital fingerprint of vehicles in transit for automatic charge of tolls, fees and/or other possible treatments, comprising a plurality of portals (2) arranged spaced apart from one another along a road, each portal (2) being provided with at least one pair of cameras (5a, 5b) respectively facing upstream and downstream of the portal (2) in the direction of travel of vehicles on at least one lane (4) of the road (3) to shoot frontally the vehicles approaching the portal (2) and, respectively, from behind the vehicles which, having passed the portal (2), move away from it; and with at least one antenna (6), in particular a DSRC antenna for dedicated short-range communication, configured to interrogate vehicle on-board devices to receive an identification code therefrom; the system (1) further comprising a data processing system (8), connected to the cameras (5a, 5b) and the antenna (6) and configured so as to process, for each of the plurality of portals (2), images and signals from the cameras (5a, 5b) and the antenna (6) for assigning each vehicle a series of data which together define a digital fingerprint of each vehicle; wherein the data processing system (8) is configured so as to:
- process images acquired by the cameras (5a, 5b) and track each vehicle shot by the cameras (5a, 5b) along a track; and
- obtain from the images acquired along the track data which are used by a classification algorithm loaded on the data processing system (8) for classifying the vehicles;
wherein, for each vehicle shot by a camera (5a, 5b), the data processing system (8) is configured to:
assign a timestamp corresponding to the passage of the vehicle; read the front plate and the rear plate of the vehicle; calculate the dimensions and/or outline of the vehicle and associate a class and/or a type of vehicle to the vehicle;
and wherein the data processing system (8) is provided with an artificial intelligence engine to solve possible incongruences; the artificial intelligence engine being configured so as to compare all the detected digital fingerprints from the plurality of portals (2) and automatically correct any errors in a single data item in a digital fingerprint when all the remaining data referred to the same digital fingerprint and to the same vehicle are consistent with and confirmed by other digital fingerprints.

10. The system according to claim 9, wherein, for each vehicle shot by a camera (5a, 5b), the data processing system (8) is configured to determine one or more other parameters of the vehicle selected from colour, brand, model, lane used by the vehicle.

11. The system according to claim 9 or 10, wherein the data processing system (8) is provided with machine learning algorithms for data acquisition and association to define the digital fingerprints of the vehicles.

12. The system according to one of claims 9 to 11, wherein the data processing system (8) comprises a local processing unit (9) positioned on the portal (2) and connected to the cameras (5a, 5b) and to the antenna (6) of the portal (2); and a central processing unit (10) connected to the local processing unit (9) and configured to receive and process data transmitted by the local processing unit (9).

13. The system according to one of claims 9 to 12, wherein each camera (5a, 5b) is provided with two different optical systems having respective focal lengths; a first optical system comprising a teleobjective, a second optical system comprising a wide-angle lens.

14. The system according to one of claims 9 to 13, wherein the cameras (5a, 5b) are IR cameras operating in the infrared field.

15. The system according to claim 14, wherein the cameras (5a, 5b) are provided with elements sensitive to infrared light, in particular having a wavelength between about 2 and about 15 µm and preferably between about 5 and about 12 µm, for example 7-10 µm.

16. The system according to one of claims 9 to 15, wherein the antenna (6) is configured so as to interrogate the vehicle on-board devices and to receive in response a signal representative of an identification code of the vehicle, which is in turn included in the digital fingerprint of the vehicle.

17. The system according to one of claims 9 to 16, used for collecting fees, such as tolls for transit of vehicles on a toll road, and comprising a payment system (11) connected to the data processing system (8), and wherein the data processing system (8) is configured so as to calculate and transmit to the payment system (11) a due fee according to the digital fingerprint of the vehicle.

## Patentansprüche

1. Verfahren zum Bestimmen des digitalen Identifikationsprofils von durchfahrenden Fahrzeugen zur automatischen Erhebung von Maut, Gebühren und/oder für sonstige mögliche Maßnahmen, umfassend die folgenden Schritte:
- Bereitstellen einer Vielzahl von Portalen (2), die entlang einer Straße (3) voneinander beabstandet angeordnet sind, wobei jedes Portal (2) mit mindestens einem Paar von Kameras (5a, 5b), die in Fahrtrichtung von Fahrzeugen auf mindestens einer Fahrspur (4) der Straße (3) jeweils auf Bereiche vor und nach dem Portal (2) gerichtet sind, um die sich dem Portal (2) nähernden Fahrzeuge von vorn und die Fahrzeuge, die das Portal (2) passiert haben und sich von ihm entfernen, von hinten aufzunehmen, und mit mindestens einer Antenne (6), insbesondere einer DSRC-Antenne für die dedizierte Kurzstreckenkommunikation, die ausgelegt, um fahrzeugseitige Bordvorrichtungen abzufragen, um von diesen einen Identifikationscode zu empfangen, versehen sind; Verarbeiten von Bildern und Signalen von den Kameras (5a, 5b) und der Antenne (6) für jedes der Vielzahl von Portalen (2), um jedem Fahrzeug eine Reihe von Daten zuzuordnen, die zusammen ein digitales Identifikationsprofil jedes Fahrzeugs definieren, wobei der Schritt des Verarbeitens von Bildern und Signalen die folgenden Schritte umfasst: Verarbeiten von durch die Kameras (5a, 5b) erfassten Bildern und Verfolgen jedes durch die Kameras (5a, 5b) aufgenommenen Fahrzeugs entlang einer Bahn und
- Erhalten von Daten aus den entlang der Bahn erfassten Bildern, die von einem Klassifizierungsalgorithmus zum Klassifizieren der Fahrzeuge verwendet werden,
- wobei der Schritt des Verarbeitens von Bildern und Signalen die folgenden Schritte umfasst: Zuordnen eines der Durchfahrt des Fahrzeugs entsprechenden Zeitstempels; Lesen des vorderen Kennzeichens und des hinteren Kennzeichens des Fahrzeugs; Berechnen der Abmessungen und/oder Kontur des Fahrzeugs anhand der entlang der Bahn erfassten Bilder und Verknüpfen einer Fahrzeugklasse und/oder eines -typs mit dem Fahrzeug, die von dem Klassifizierungsalgorithmus zum Klassifizieren der Fahrzeuge verwendet werden, und
- wobei der Schritt des Verarbeitens von Bildern und Signalen von einer Engine der künstlichen Intelligenz durchgeführt wird, um mögliche Unstimmigkeiten zu beheben, und die folgenden Schritte umfasst: Vergleichen aller von der Vielzahl von Portalen (2) erkannten digitalen Identifikationsprofile und automatisches Korrigieren eines Fehlers in einem einzelnen Datenelement in einem digitalen Identifikationsprofil, wenn alle übrigen Daten, die sich auf dasselbe digitale Identifikationsprofil und dasselbe Fahrzeug beziehen, mit anderen digitalen Identifikationsprofilen übereinstimmen und durch diese bestätigt werden.

2. Verfahren nach Anspruch 1, wobei der Schritt des Verarbeitens von Bildern und Signalen den Schritt des Bestimmens von einem oder mehrerer anderen Parametern des Fahrzeugs umfasst, die aus Farbe, Hersteller, Modell, von dem Fahrzeug genutzter Fahrbahn ausgewählt sind.

3. Verfahren nach Anspruch 1 oder 2, wobei der Schritt des Verarbeitens von Bildern und Signalen durch Algorithmen des maschinellen Lernens zur Datenerfassung und - verknüpfung durchgeführt wird, um die digitalen Identifikationsprofile der Fahrzeuge zu definieren.

4. Verfahren nach einem der vorhergehenden Ansprüche, wobei jede Kamera (5a, 5b) mit zwei unterschiedlichen optischen Systemen versehen ist, die jeweilige Brennweiten aufweisen, wobei ein erstes optisches System ein Teleobjektiv umfasst und ein zweites optisches System ein Weitwinkelobjektiv umfasst.

5. Verfahren nach einem der vorhergehenden Ansprüche, wobei die Kameras (5a, 5b) IR-Kameras sind, die im Infrarotbereich arbeiten.

6. Verfahren nach Anspruch 5, wobei die Kameras (5a, 5b) mit Elementen versehen sind, die für Infrarotlicht empfindlich sind, insbesondere aufweisend eine Wellenlänge zwischen etwa 2 und etwa 15 µm und vorzugsweise zwischen etwa 5 und etwa 12 µm, beispielsweise 7-10 µm.

7. Verfahren nach einem der vorhergehenden Ansprüche, wobei der Schritt des Verarbeitens von Bildern und Signalen einen Schritt des Abfragens der fahrzeugseitigen Bordvorrichtungen mittels der Antenne (6) und als Antwort des Empfangens eines für einen Identifikationscode des Fahrzeugs repräsentativen Signals, das wiederum in dem digitalen Identifikationsprofil des Fahrzeugs enthalten ist, umfasst.

8. Verfahren nach einem der vorhergehenden Ansprüche, das zum Erheben von Gebühren wie Maut für die Durchfahrt von Fahrzeugen auf einer mautpflichtigen Straße verwendet wird und einen Schritt des Berechnens einer fälligen Gebühr gemäß dem Identifikationsprofil des Fahrzeugs und des Übermittelns dieser Gebühr an ein Zahlungssystem (11) umfasst.

9. System (1) zum Bestimmen des digitalen Identifikationsprofils von durchfahrenden Fahrzeugen zur automatischen Erhebung von Maut, Gebühren und/oder für sonstige mögliche Maßnahmen, umfassend eine Vielzahl von Portalen (2), die entlang einer Straße voneinander beabstandet angeordnet sind, wobei jedes Portal (2) mit mindestens einem Paar von Kameras (5a, 5b), die in Fahrtrichtung von Fahrzeugen auf mindestens einer Fahrspur (3) der Straße (2) jeweils auf Bereiche vor und nach dem Portal (4) gerichtet sind, um die sich dem Portal (2) nähernden Fahrzeuge von vorn und die Fahrzeuge, die das Portal (2) passiert haben und sich von ihm entfernen, von hinten aufzunehmen, und mit mindestens einer Antenne (6), insbesondere einer DSRC-Antenne für die dedizierte Kurzstreckenkommunikation, die ausgelegt ist, um fahrzeugseitige Bordvorrichtungen abzufragen, um von diesen einen Identifikationscode zu empfangen, versehen ist, wobei das System (1) ferner ein Datenverarbeitungssystem (8) umfasst, das mit den Kameras (5a, 5b) und der Antenne (6) verbunden und dazu ausgelegt ist, für jedes der Vielzahl von Portalen (2) Bilder und Signale von den Kameras (5a, 5b) und der Antenne (6) zu verarbeiten, um jedem Fahrzeug eine Reihe von Daten zuzuordnen, die zusammen ein digitales Identifikationsprofil für jedes Fahrzeug definieren, wobei das Datenverarbeitungssystem (8) zu Folgendem ausgelegt ist:
- Verarbeiten von durch die Kameras (5a, 5b) erfassten Bildern und Verfolgen jedes durch die Kameras (5a, 5b) aufgenommenen Fahrzeugs entlang einer Bahn und
- Erhalten von Daten aus den entlang der Bahn erfassten Bildern, die von einem Klassifizierungsalgorithmus, der in das Datenverarbeitungssystem (8) geladen ist, zum Klassifizieren der Fahrzeuge verwendet werden, wobei das Datenverarbeitungssystem (8) für jedes von einer Kamera (5a, 5b) aufgenommene Fahrzeug zu Folgendem ausgelegt ist: Zuordnen eines der Durchfahrt des Fahrzeugs entsprechenden Zeitstempels; Lesen des vorderen und des hinteren Kennzeichens des Fahrzeugs; Berechnen der Abmessungen und/oder Kontur des Fahrzeugs und Verknüpfen einer Fahrzeugklasse und/oder eines -typs mit dem Fahrzeug, und wobei das Datenverarbeitungssystem (8) mit einer Engine der künstlichen Intelligenz versehen ist, um mögliche Unstimmigkeiten zu beheben, wobei die Engine der künstlichen Intelligenz dazu ausgelegt ist, alle von der Vielzahl von Portalen (2) erkannten digitalen Identifikationsprofile zu vergleichen und Fehler in einem einzelnen Datenelement in einem digitalen Identifikationsprofil automatisch zu korrigieren, wenn alle übrigen Daten, die sich auf dasselbe digitale Identifikationsprofil und dasselbe Fahrzeug beziehen, mit anderen digitalen Identifikationsprofilen übereinstimmen und durch diese bestätigt werden.

10. System nach Anspruch 9, wobei das Datenverarbeitungssystem (8) ausgelegt ist, um für jedes von einer Kamera (5a, 5b) aufgenommene Fahrzeug einen oder mehrere andere Parameter des Fahrzeugs zu bestimmen, die ausgewählt sind aus Farbe, Hersteller, Modell, von dem Fahrzeug genutzter Fahrbahn.

11. System nach Anspruch 9 oder 10, wobei das Datenverarbeitungssystem (8) mit Algorithmen des maschinellen Lernens zur Datenerfassung und -verknüpfung versehen ist, um die digitalen Identifikationsprofile der Fahrzeuge zu definieren.

12. System nach einem der Ansprüche 9 bis 11, wobei das Datenverarbeitungssystem (8) eine lokale Verarbeitungseinheit (9), die an dem Portal (2) positioniert und mit den Kameras (5a, 5b) und der Antenne (6) des Portals (2) verbunden ist, sowie eine zentrale Verarbeitungseinheit (10), die mit der lokalen Verarbeitungseinheit (9) verbunden und ausgelegt ist, um von der lokalen Verarbeitungseinheit (9) übermittelte Daten zu empfangen und zu verarbeiten, umfasst.

13. System nach einem der Ansprüche 9 bis 12, wobei jede Kamera (5a, 5b) mit zwei unterschiedlichen optischen Systemen versehen ist, die jeweilige Brennweiten aufweisen, wobei ein erstes optisches System ein Teleobjektiv umfasst und ein zweites optisches System ein Weitwinkelobjektiv umfasst.

14. System nach einem der Ansprüche 9 bis 13, wobei die Kameras (5a, 5b) IR-Kameras sind, die im Infrarotbereich arbeiten.

15. System nach Anspruch 14, wobei die Kameras (5a, 5b) mit Elementen versehen sind, die für Infrarotlicht empfindlich sind, insbesondere aufweisend eine Wellenlänge zwischen etwa 2 und etwa 15 µm und vorzugsweise zwischen etwa 5 und etwa 12 µm, beispielsweise 7-10 µm.

16. System nach einem der Ansprüche 9 bis 15, wobei die Antenne (6) dazu ausgelegt ist, die fahrzeugseitigen Bordvorrichtungen abzufragen und als Antwort ein Signal zu empfangen, das repräsentativ für einen Identifikationscode des Fahrzeugs ist, der wiederum in dem digitalen Identifikationsprofil des Fahrzeugs enthalten ist.

17. System nach einem der Ansprüche 9 bis 16, das zur Erhebung von Gebühren wie Maut für die Durchfahrt von Fahrzeugen auf einer mautpflichtigen Straße verwendet wird, umfassend ein Zahlungssystem (11), das mit dem Datenverarbeitungssystem (8) verbunden ist, wobei das Datenverarbeitungssystem (8) dazu ausgelegt ist, eine fällige Gebühr gemäß dem digitalen Identifikationsprofil des Fahrzeugs zu berechnen und an das Zahlungssystem (11) zu übermitteln.

## Revendications

1. Procédé destiné à déterminer l'empreinte numérique de véhicules en circulation en vue de la perception automatique de péages, de redevances et/ou d'autres mesures éventuelles, comprenant les étapes suivantes :
- la mise en place d'une pluralité de portiques (2) disposés à distance les uns des autres le long d'une route (3), chaque portique (2) étant équipé d'au moins une paire de caméras (5a, 5b) orientées respectivement en amont et en aval du portique (2) dans le sens de circulation des véhicules sur au moins une voie (4) de la route (3) afin de filmer de face les véhicules s'approchant du portique (2) et, respectivement, de dos les véhicules qui, après avoir franchi le portique (2), s'en éloignent ; et d'au moins une antenne (6), en particulier une antenne DSRC pour communication dédiée à courte portée, configurée pour interroger les dispositifs embarqués des véhicules afin d'en recevoir un code d'identification ; le traitement, pour chacun de la pluralité de portiques (2), des images et des signaux provenant des caméras (5a, 5b) et de l'antenne (6) afin d'attribuer à chaque véhicule une série de données qui, ensemble, définissent une empreinte numérique de chaque véhicule ; dans lequel l'étape de traitement des images et des signaux comprend les étapes suivantes : le traitement des images acquises par les caméras (5a, 5b) et le suivi de chaque véhicule filmé par les caméras (5a, 5b) le long d'une trajectoire ; et
- l'obtention, à partir des images acquises le long de la trajectoire, de données qui sont utilisées par un algorithme de classification pour classer les véhicules ;
- dans lequel l'étape de traitement des images et des signaux comprend les étapes suivantes : l'attribution d'un horodatage correspondant au passage du véhicule ; la lecture de la plaque d'immatriculation avant et la plaque d'immatriculation arrière du véhicule ; le calcul, à partir des images acquises le long de la trajectoire, des dimensions et/ou du contour du véhicule et l'association au véhicule d'une classe et/ou d'un type de véhicule qui sont utilisés par l'algorithme de classification pour classer les véhicules ; et
- dans lequel l'étape de traitement des images et des signaux est effectuée par un moteur d'intelligence artificielle afin de résoudre d'éventuelles incohérences et comprend les étapes suivantes : la comparaison de toutes les empreintes numériques détectées provenant de la pluralité de portiques (2) et la correction automatique d'une erreur dans un élément de données unique d'une empreinte numérique lorsque toutes les données restantes se rapportant à la même empreinte numérique et au même véhicule sont cohérentes avec d'autres empreintes numériques et confirmées par celles-ci.

2. Procédé selon la revendication 1, dans lequel l'étape de traitement des images et des signaux comprend l'étape consistant à déterminer un ou plusieurs autres paramètres du véhicule choisis parmi la couleur, la marque, le modèle et la voie empruntée par le véhicule.

3. Procédé selon la revendication 1 ou 2, dans lequel l'étape de traitement des images et des signaux est réalisée par des algorithmes d'apprentissage automatique pour l'acquisition et l'association de données afin de définir les empreintes numériques des véhicules.

4. Procédé selon l'une des revendications précédentes, dans lequel chaque caméra (5a, 5b) est équipée de deux systèmes optiques différents ayant des distances focales respectives ; un premier système optique comprenant un téléobjectif, un second système optique comprenant un objectif grand angle.

5. Procédé selon l'une des revendications précédentes, dans lequel les caméras (5a, 5b) sont des caméras IR fonctionnant dans le domaine infrarouge.

6. Procédé selon la revendication 5, dans lequel les caméras (5a, 5b) sont équipées d'éléments sensibles à la lumière infrarouge, en particulier ayant une longueur d'onde comprise entre environ 2 et environ 15 µm et de préférence entre environ 5 et environ 12 µm, par exemple 7 à 10 µm.

7. Procédé selon l'une des revendications précédentes, dans lequel l'étape de traitement des images et des signaux comprend une étape consistant à interroger les dispositifs embarqués des véhicules au moyen de l'antenne (6) et à recevoir en réponse un signal représentatif d'un code d'identification du véhicule, qui est à son tour inclus dans l'empreinte numérique du véhicule.

8. Procédé selon l'une des revendications précédentes, utilisé pour la perception de redevances, telles que des péages pour la circulation de véhicules sur une route à péage, et comprenant une étape consistant à calculer une redevance due en fonction de l'empreinte numérique du véhicule, et à transmettre ladite redevance due à un système de paiement (11).

9. Système (1) destiné à déterminer l'empreinte numérique de véhicules en circulation en vue de la perception automatique de péages, de redevances et/ou d'autres mesures éventuelles, comprenant une pluralité de portiques (2) disposés à distance les uns des autres le long d'une route, chaque portique (2) étant muni d'au moins une paire de caméras (5a, 5b) orientées respectivement en amont et en aval du portique (2) dans le sens de circulation des véhicules sur au moins une voie (4) de la route (3) afin de filmer de face les véhicules s'approchant du portique (2) et, respectivement, de dos les véhicules qui, après avoir franchi le portique (2), s'en éloignent ; et d'au moins une antenne (6), en particulier une antenne DSRC pour communication dédiée à courte portée, configurée pour interroger les dispositifs embarqués des véhicules afin d'en recevoir un code d'identification ; le système (1) comprenant en outre un système de traitement de données (8), connecté aux caméras (5a, 5b) et à l'antenne (6) et configuré de manière à traiter, pour chacun de la pluralité de portiques (2), les images et les signaux provenant des caméras (5a, 5b) et de l'antenne (6) afin d'attribuer à chaque véhicule une série de données qui, ensemble, définissent une empreinte numérique de chaque véhicule ; le système de traitement de données (8) étant configuré de manière à :
- traiter les images acquises par les caméras (5a, 5b) et suivre chaque véhicule filmé par les caméras (5a, 5b) le long d'une trajectoire ; et
- extraire des images acquises le long de la trajectoire des données utilisées par un algorithme de classification chargé sur le système de traitement de données (8) pour classer les véhicules ; dans lequel, pour chaque véhicule filmé par une caméra (5a, 5b), le système de traitement de données (8) est configuré pour : attribuer un horodatage correspondant au passage du véhicule ; lire la plaque d'immatriculation avant et la plaque d'immatriculation arrière du véhicule ; calculer les dimensions et/ou le contour du véhicule et associer une classe et/ou un type de véhicule au véhicule ; et dans lequel le système de traitement de données (8) est équipé d'un moteur d'intelligence artificielle pour résoudre d'éventuelles incohérences ; le moteur d'intelligence artificielle étant configuré de manière à comparer toutes les empreintes numériques détectées à partir de la pluralité de portiques (2) et à corriger automatiquement toute erreur dans un élément de données donné d'une empreinte numérique lorsque toutes les autres données se rapportant à cette même empreinte numérique et au même véhicule sont cohérentes avec et confirmées par d'autres empreintes numériques.

10. Système selon la revendication 9, dans lequel, pour chaque véhicule filmé par une caméra (5a, 5b), le système de traitement de données (8) est configuré pour déterminer un ou plusieurs autres paramètres du véhicule choisis parmi la couleur, la marque, le modèle et la voie empruntée par le véhicule.

11. Système selon la revendication 9 ou 10, dans lequel le système de traitement de données (8) est doté d'algorithmes d'apprentissage automatique pour l'acquisition et l'association de données afin de définir les empreintes numériques des véhicules.

12. Système selon l'une des revendications 9 à 11, dans lequel le système de traitement de données (8) comprend une unité de traitement locale (9) positionnée sur le portique (2) et connectée aux caméras (5a, 5b) ainsi qu'à l'antenne (6) du portique (2) ; et une unité de traitement centrale (10) reliée à l'unité de traitement locale (9) et configurée pour recevoir et traiter les données transmises par l'unité de traitement locale (9).

13. Système selon l'une des revendications 9 à 12, dans lequel chaque caméra (5a, 5b) est équipée de deux systèmes optiques différents ayant des distances focales respectives ; un premier système optique comprenant un téléobjectif, un second système optique comprenant un objectif grand angle.

14. Système selon l'une des revendications 9 à 13, dans lequel les caméras (5a, 5b) sont des caméras IR fonctionnant dans le domaine infrarouge.

15. Système selon la revendication 14, dans lequel les caméras (5a, 5b) sont équipées d'éléments sensibles à la lumière infrarouge, en particulier ayant une longueur d'onde comprise entre environ 2 et environ 15 µm et de préférence entre environ 5 et environ 12 µm, par exemple 7 à 10 µm.

16. Système selon l'une des revendications 9 à 15, dans lequel l'antenne (6) est configurée de manière à interroger les dispositifs embarqués des véhicules et à recevoir en réponse un signal représentatif d'un code d'identification du véhicule, qui est à son tour inclus dans l'empreinte numérique du véhicule.

17. Système selon l'une des revendications 9 à 16, utilisé pour la perception de redevances, telles que des péages pour la circulation de véhicules sur une route à péage, et comprenant un système de paiement (11) connecté au système de traitement de données (8), et dans lequel le système de traitement de données (8) est configuré de manière à calculer et à transmettre au système de paiement (11) des redevances dues en fonction de l'empreinte numérique du véhicule.
